# EUROPEAN PATENT APPLICATION

(11) **EP 4 641 801 A1**
(43) Date of publication of application: **29.10.2025**
(21) Application number: 24172665.2
(22) Date of filing: 26.04.2024
(51) Int. Cl.: H01M 50/342, H01M 10/658, H01M 50/383, H01M 50/35, H01M 50/367, H01M 50/204, H01M 50/249, H01M 50/271, H01M 50/273, H01M 50/591, H01M 50/593

(54) **BATTERY SYSTEM INCLUDING IMPROVED CELL COVER ATTACHMENT**

(71) Applicant: Samsung SDI Co., Ltd., Yongin-si, Gyeonggi-do 17084 (KR)
(72) Inventor: Tripaum, Florian, 7412 Wolfau (AT)
(74) Representative: Gulde & Partner

(57) **Abstract**

The present disclosure refers to a battery system (100) including a plurality of battery cells (12), wherein each of the battery cells (12) includes a venting side with a venting exit (14) for discharging a venting gas stream (V), a cover element (20) covering one or more of the plurality of battery cells (12) at the venting sides to protect the battery cells (12) from the venting gas stream (V), wherein the cover element (20) is directly sealed to the venting side of each battery cell (12) by an adhesive (16) extending around each of the venting exits (14).

## Description

### Field of the Disclosure

The present disclosure relates to a battery system and a vehicle including such a battery system.

### Technological Background

Recently, vehicles for transportation of goods and peoples have been developed that use electric power as a source for motion. Such an electric vehicle is an automobile that is propelled permanently or temporarily by an electric motor, using energy stored in rechargeable batteries. An electric vehicle may be solely powered by batteries (Battery Electric Vehicle BEV) or may include a combination of an electric motor and, for example, a conventional combustion engine (Plugin Hybrid Electric Vehicle PHEV). BEVs and PHEVs use high-capacity rechargeable batteries, which are designed to provide power for propulsion over sustained periods of time.

Generally, a rechargeable (or secondary) battery cell includes an electrode assembly including a positive electrode, a negative electrode, and a separator interposed between the electrodes. A solid or liquid electrolyte allows movement of ions during charging and discharging of the battery cell. The electrode assembly is located in a casing and electrode terminals, which are positioned on the outside of the casing, establish an electrically conductive connection to the electrodes. The shape of the casing may be, for example, cylindrical or rectangular.

A battery module is formed of a plurality of battery cells connected together in series or in parallel. That is, the battery module is formed by interconnecting the electrode terminals of the plurality of battery cells depending on a desired amount of power and in order to realize a high-power rechargeable battery.

Battery modules can be constructed in either a block design or in a modular design. In the block design each battery cell is coupled to a common current collector structure and a common battery management system and the unit thereof is arranged in a housing. In the modular design, pluralities of battery cells are connected together to form submodules and several submodules are connected together to form the battery module. In automotive applications, battery systems generally include a plurality of battery modules connected together in series to provide a desired voltage.

A battery pack is a set of any number of (for example identical) battery modules or single battery cells. The battery modules, respectively battery cells, may be configured in a series, parallel or a mixture of both to deliver the desired voltage, capacity, and/or power density. Components of a battery pack include the individual battery modules, and the interconnects, which provide electrical conductivity between the battery modules.

Exothermic decomposition of cell components may lead to a so-called thermal runaway. Generally, thermal runaway describes a process that accelerates due to increased temperature, in turn releasing energy that further increases temperature. Thermal runaway occurs in situations when an increase in temperature changes the conditions in a way that causes a further increase in temperature, often leading to a destructive result. In rechargeable battery systems, thermal runaway is associated with strong exothermic reactions that are accelerated by temperature rise. In thermal runaway, the battery cell temperature rises incredibly fast and the energy stored is released very suddenly. In extreme cases, thermal runaway can cause battery cells to explode and start fire. In minor cases, it can cause battery cells to be damaged beyond repair.

When a battery cell is heated above a critical temperature (for example, above 150°C) the battery cell can transition into a thermal runaway. Generally, temperatures outside of the safe region on either the low or high side may lead to irreversible damage to the battery cell and therefore may possible trigger thermal runaway. Thermal runaway may also occur due to an internal or external short circuit of the battery cell or poor battery maintenance. For example, overcharging or rapid charging may lead to thermal runaway.

During thermal runaway, the failed battery cell may reach a temperature exceeding 700°C. Further, large quantities of hot gas are ejected from inside of the failed battery cell through the venting opening of the cell housing into the battery pack. The main components of the vented gas are H₂, CO₂, CO, electrolyte vapor and other hydrocarbons. The vented gas is therefore flammable and potentially toxic. The vented gas also causes a gas-pressure to increase inside the battery pack. In the worst case, the high temperatures lead to the process spreading to neighboring cells and fire in the battery pack. At this stage, the fire is hardly to extinguish.

The BMS is critical to the safe operation and optimal performance of rechargeable battery cells and helps minimize the possibility of thermal runaway. For example, if the BMS detects that the temperature is too hot, it can regulate the temperature by controlling cooling fans. Alternatively, if the battery cell cannot be cooled and safe conditions restored, the BMS may shut down necessary battery cells to protect the entire system.

A venting concept for a battery in the related art is to let the venting gas stream discharged by the battery cell(s) expand into the battery housing and escape through a housing venting valve to the outside (e.g., to the environment of the battery housing). The venting gas stream thereby heats up the components inside the battery housing such as the other battery cells. For example, particles from the venting gas stream may deposit onto the battery cells which may lead to thermal propagation and may incite thermal runaway in adjacent battery cells. To protect the battery cells from this, a cover element may be provided covering the battery cells at their venting side.

Such a cover element may include venting openings in the form of through-holes that are aligned with venting exits of the battery cells to let the venting gas stream pass through the cover element in case of a thermal runaway of one of the covered battery cells. After passing through the cover element, particles of the discharged venting gas stream may deposit onto the cover element. Thereby, however, particles of the venting gas stream may pass through another venting opening of the cover element that is aligned with the venting exit of one of the battery cells and may thus enter the other battery cell. This may lead to thermal propagation to the other battery cell and, in the worst case, incite a thermal runaway in the other battery cell.

To address this problem, a cover element may be provided that is thin enough to rupture at sections opposite the venting exits of the battery cells and corresponding in form to the venting exits when exposed to the high pressure of the venting gas stream exiting one of the covered battery cells affected by a thermal runaway. Also, the cover element may, at sections opposite the venting exits, include perforations corresponding to the venting exits so as to provide a predetermined breaking point that may rupture when exposed to the high pressure of the venting gas stream. Usually, the cover element is glued to the surface of the battery cells via two adhesive strips that extend along straight lines along a stacking direction of the battery cells thereby spanning multiple battery cells, wherein one adhesive strip is disposed on each side of the venting exits of the battery cells.

These solutions, however, bear the risk that the cover element is bent outwards by the pressure of the venting gas stream before the cover element ruptures, the cover element thereby lifting off from battery cells adjacent to the affected battery cell so that venting gas might possibly flow underneath the cover element towards the adjacent battery cells. The two adhesive strips may form a tunnel for the venting gas stream extending along the surfaces of the battery cells from one battery cell to the next. This may lead to thermal propagation to the adjacent battery cells and, in the worst case, incite a thermal runaway in the adjacent battery cells.

It is thus an object of the present invention to overcome or reduce at least some of the drawbacks of the prior art and to provide a battery system which more securely handles a thermal runaway of one or more of its battery cells.

### Summary of Invention

The invention is defined by the appended claims. The description that follows is subjected to this limitation. Any disclosure lying outside the scope of said claims is only intended for illustrative as well as comparative purposes.

According to one aspect of the present disclosure, a battery system includes a plurality of battery cells, wherein each of the battery cells includes a venting side with a venting exit for discharging a venting gas stream, a cover element covering one or more of the plurality of battery cells at the venting sides to protect the battery cells from the venting gas stream, wherein the cover element is directly sealed to the venting side of each battery cell by an adhesive extending around each of the venting exits.

According to an aspect of the present disclosure, the cover element is formed in one piece from a sheet material.

According to an aspect of the present disclosure, the cover element is a mica sheet.

According to an aspect of the present disclosure, the entire venting side surfaces of the battery cells, aside from the areas around the venting exits, are provided with the adhesive.

According to an aspect of the present disclosure, the adhesive includes an adhesive bead.

According to an aspect of the present disclosure, the adhesive includes a gap filler.

According to an aspect of the present disclosure, the cover element is adapted to rupture at a section opposite the venting exits by the pressure of the discharged venting gas stream exiting the covered venting exit.

According to an aspect of the present disclosure, the cover element includes material weakening portions opposite the venting exits of the battery cells.

Yet another aspect of the present disclosure refers to an electric vehicle including the battery system according to the disclosure.

Further aspects of the present disclosure could be learned from the dependent claims or the following description.

### Brief Description of the Drawings

Features will become apparent to those of ordinary skill in the art by describing in detail exemplary embodiments with reference to the attached drawings in which:
FIG. 1 illustrates a schematic top view of a battery system according to an embodiment.
FIG. 2 illustrates a schematic cross section of the battery system shown in FIG. 1.

### Detailed Description of the invention

Reference will now be made in detail to embodiments, examples of which are illustrated in the accompanying drawings. Effects and features of the exemplary embodiments, and implementation methods thereof will be described with reference to the accompanying drawings. In the drawings, like reference numerals denote like elements, and redundant descriptions are omitted. The present disclosure, however, may be embodied in various different forms, and should not be construed as being limited to only the illustrated embodiments herein. Rather, these embodiments are provided as examples so that this disclosure will be thorough and complete, and will fully convey the aspects and features of the present disclosure to those skilled in the art.

Accordingly, processes, elements, and techniques that are not considered necessary to those having ordinary skill in the art for a complete understanding of the aspects and features of the present disclosure may not be described. In the drawings, the relative sizes of elements, layers, and regions may be exaggerated for clarity.

As used herein, the term "and/or" includes any and all combinations of one or more of the associated listed items. Further, the use of "may" when describing embodiments of the present disclosure refers to "one or more embodiments of the present disclosure." In the following description of embodiments of the present disclosure, the terms of a singular form may include plural forms unless the context clearly indicates otherwise.

It will be understood that although the terms "first" and "second" are used to describe various elements, these elements should not be limited by these terms. These terms are only used to distinguish one element from another element. For example, a first element may be named a second element and, similarly, a second element may be named a first element, without departing from the scope of the present disclosure. As used herein, the term "and/or" includes any and all combinations of one or more of the associated listed items. Expressions such as "at least one of," when preceding a list of elements, modify the entire list of elements and do not modify the individual elements of the list.

As used herein, the term "substantially," "about," and similar terms are used as terms of approximation and not as terms of degree, and are intended to account for the inherent deviations in measured or calculated values that would be recognized by those of ordinary skill in the art. Further, if the term "substantially" is used in combination with a feature that could be expressed using a numeric value, the term "substantially" denotes a range of +/- 5% of the value centered on the value.

It will be further understood that the terms "include," "comprise," "including," or "comprising" specify a property, a region, a fixed number, a step, a process, an element, a component, and a combination thereof but do not exclude other properties, regions, fixed numbers, steps, processes, elements, components, and combinations thereof.

It will also be understood that when a film, a region, or an element is referred to as being "above" or "on" another film, region, or element, it can be directly on the other film, region, or element, or intervening films, regions, or elements may also be present.

Herein, the terms "upper" and "lower" are defined according to the z-axis. For example, the upper cover is positioned at the upper part of the z-axis, whereas the lower cover is positioned at the lower part thereof. In the drawings, the sizes of elements may be exaggerated for clarity. For example, in the drawings, the size or thickness of each element may be arbitrarily shown for illustrative purposes, and thus the embodiments of the present disclosure should not be construed as being limited thereto.

In the following description of embodiments of the present disclosure, the terms of a singular form may include plural forms unless the context clearly indicates otherwise.

Unless otherwise defined, all terms (including technical and scientific terms) used herein have the same meaning as commonly understood by one of ordinary skill in the art to which the present disclosure belongs. It will be further understood that terms, such as those defined in commonly used dictionaries, should be interpreted as having a meaning that is consistent with their meaning in the context of the relevant art and/or the present specification, and should not be interpreted in an idealized or overly formal sense, unless expressly so defined herein.

### General Concept

According to one aspect of the present disclosure, a battery system is provided. The battery system includes a plurality of battery cells. The battery cells may be accommodated inside a battery housing of the battery system. The battery cells may be arranged, or stacked, along a stacking direction to form one or more cell stacks. The battery cells may be interconnected via electrical connecting means, for example, busbars, contacting respective electrode terminals of the battery cells to form one or more battery modules/battery packs. The battery cells may be arranged to form one or more battery packs, wherein in a battery pack the battery cells may be electrically interconnected, for example, in a series and/or in parallel as explained above. Multiple of these battery packs may form a battery module. The battery cells may, for example, be prismatic or cylindrical cells.

Each of the battery cells includes a venting exit at a venting side of the battery cell, which may be a terminal side of the battery cells where the electrode terminals of the battery cells are disposed. Each venting exit is adapted to allow for a venting gas stream to be discharged from the respective battery cell during a thermal runaway of this battery cell. Venting valves may be provided at the venting exits which may open upon a predefined pressure being exceeded.

The battery system further includes a heat-resistant cover element, or cover sheet, that is arranged such that it covers one or more of the plurality of battery cells at their venting sides. That is, the cover element may cover multiple, or all, of the plurality of battery cells at their venting sides. In other words, the cover element may span, or extend about, all of the battery cells. Alternatively, multiple cover elements may be provided, each covering one the battery cells. The cover element may cover the top side of the battery cell(s). The cover element is directly sealed to each battery cell by an adhesive extending around, i.e. surrounding, each of the venting exits. That is, the cover element is adhered to the surface of each battery cell via the adhesive. The adhesive may extend around each venting exits uninterrupted. For example, each of the venting exits may be surrounded by an uninterrupted line of adhesive. The adhesive may be applied to the venting sides, e.g. to a top side, of the battery cells such that it surrounds each of the venting exits. For example, the adhesive may be applied in the form of multiple beads, or lines, each surrounding the venting exits.

The cover element according to the present disclosure is securely adhered to the venting sides of the battery cells via the adhesive extending around each of the venting exits. This provides for a secure sealing in every direction. That is, due to the adhesive extending around each of the venting exits each one of venting exits is sealed off from the other venting exits, i.e. there is no passage for a venting gas stream that exits one of the venting exits that would lead to another battery cell. In other words, no tunnel extending along the surfaces of the battery cells from one battery cell to the next is provided for the venting gas stream. Further, the sealing surrounding the venting exits provides that the cover element is not bent outwards, or lifted off, by the pressure of the venting gas stream, for example when the cover element is adapted to rupture at sections opposite the venting exits of the battery cells when exposed to the pressure of the venting gas stream exiting one of the covered battery cells affected by a thermal runaway. Thus, thermal propagation to adjacent battery cells and a thermal runaway of the adjacent battery cells is reliably prevented.

According to an embodiment, the cover element is formed in one piece from a sheet material. That is, the cover element may be formed from a single piece of sheet material. This provides for a simple manufacturing of the cover element. Also, such a cover element may be securely adhered to the battery cells via the adhesive and may allow for the cover element to rupture at sections opposite the venting exits.

According to an embodiment, the cover element is a mica sheet. That is, the sheet material may be a mica sheet. In other words, the cover element may be formed in one piece from a mica sheet. The cover element may thus include mica. Mica means mica silicate minerals. Such mica sheets are heat-resistant so that the cover element may withstand any particles from the venting gas stream being deposited onto the cover element. Also, such a mica sheet may be a suitable material for allowing the cover element to rupture at sections opposite the venting exits.

According to an embodiment, the entire venting side surfaces of the battery cells, aside from the areas around the venting exits, are provided with the adhesive. In other words, the adhesive may cover the complete venting sides, e.g. the complete top side, of the battery cells. Thus, the cover element may be securely sealed onto the entire surface. This may provide a secure and reliable sealing of the cover element to the battery cells and may thus prevent lift off of the cover element.

According to an embodiment, the adhesive is or includes an adhesive bead. A bead means a bulge or line, i.e. the adhesive may be applied in the form of a line. Each of the venting exits may be surrounded by such an adhesive bead. In other words, the adhesive may include a plurality of adhesive beads, each adhesive bead extending around one of the venting exits. Providing the adhesive in the form of adhesive beads extending around the venting exits may provide a secure and reliable sealing of the cover element to the battery cells and may thus prevent lift off of the cover element.

According to an embodiment, the adhesive is or includes a gap filler. The gap filler may, for example, be Sepur 114 FR THIXO/L+DK001. Using a gap filler as an adhesive, e.g. in the form of adhesive beads extending around the venting exits, may provide a secure and reliable sealing of the cover element to the battery cells and may thus prevent lift off of the cover element.

According to an embodiment, the cover element is adapted to rupture at a section opposite the venting exits by the pressure of the discharged venting gas stream exiting the covered venting exit. The cover element may be adapted a such by having a specific maximum thickness, i.e. by being thin enough to get ruptured by the venting gas stream. According to an embodiment, the cover element includes material weakening portions, for example perforations, opposite the venting exits of the battery cells. These material weakening portions may adapt the cover element to rupture at a section opposite the venting exits. Thus, the cover element may, at sections opposite the venting exits, include perforations corresponding to the venting exits so as to provide a predetermined breaking point that may rupture when exposed to the high pressure of the venting gas stream. This may ensure that the venting gas stream can leave the underlying battery cell that is affected by the thermal runaway. Due to the adhesive extending around the venting exits, the cover element is nevertheless securely held at the battery cells without lift-off.

The invention also pertains to an electric vehicle including a battery system according to the disclosure, for example as a traction battery.

### Specific Embodiments

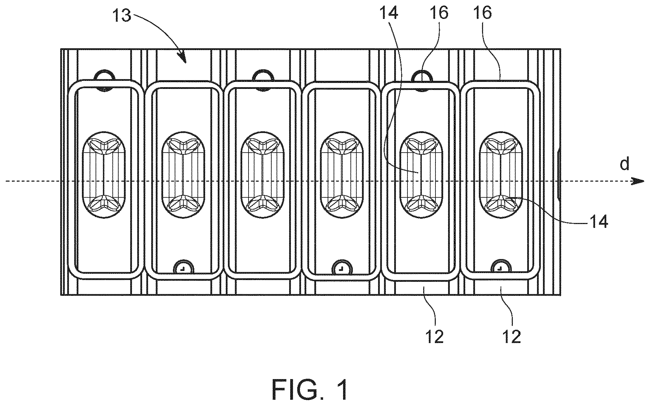

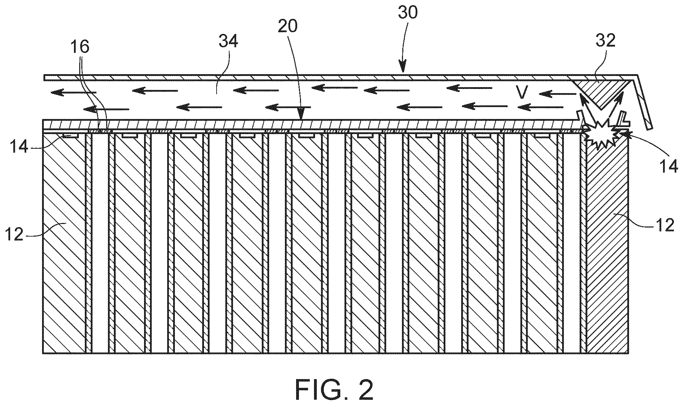

FIG. 1 is a top view of a battery system 100 according to an embodiment of the present disclosure without a cover element 20 (see FIG. 2). The battery system 100 includes a plurality of battery cells 12 arranged along a stacking direction d. Each of the battery cells 12 includes, at a venting side thereof, a venting exit 14 for discharging a venting gas stream V in case of a thermal runaway. Each of the venting exits 14 may include a venting valve. The venting sides of the battery cells 12 form a top side 13 of the battery cells 12.

Each of the venting exits 14 is surrounded by an adhesive 16 forming an uninterrupted line. The adhesive 16 may be a gap filler. The adhesive 16 may be or include an adhesive bead. A bead may mean a bulge or line. The adhesive 16 serves to seal the cover element 20 (not shown in FIG. 1) onto the top side 13 of the battery cells 12.

FIG. 2 is a sectional view of the battery system 100 showing the plurality of battery cells 12 covered by the cover element 20. The cover element 20 may be formed in one piece from a mica sheet. The cover element 20 may, at sections opposite the venting exits 14, include perforations corresponding to the venting exits 14 so as to provide a predetermined breaking point that may rupture when exposed to the pressure of the venting gas stream V.

The cover element 20 is directly sealed to the top side 13, i.e. the venting side, of the battery cells 12 via the adhesives 16 which extend around each of the venting exits 14.

In FIG. 2, a thermal runaway occurs in the rightmost battery cell 12 resulting in a venting gas stream V being discharged from the venting exit 14 of the rightmost battery cell 12. The cover element 20 gets ruptured by the venting gas stream V at a section opposite the venting exit 14 as shown in FIG. 2. The venting gas stream V may be diverted by a protrusion 32 extending from a wall member 30, which may form part of a battery housing, and may be directed along a venting channel 34 formed between the wall member 30 and the cover element 20.

The adhesives 16 surrounding each venting exit 14 provide a circumferential sealing which prevents the venting gas stream V from flowing between the top side 13 and the cover element 20 towards adjacent battery cells 12. That is, due to the adhesive 16 extending around each of the venting exits 14 each one of venting exits 14 is sealed off from the other venting exits 14, i.e. no tunnel for the venting gas stream extending along the surfaces of the battery cells 12 from one battery cell 12 to the next is generated as might be the case with adhesive 16 being applied in straight lines spanning multiple battery cells 12.

Further, the adhesives 16 surrounding the venting exits 14 provide that the cover element 20 is not bent outwards, or lifted off, by the pressure of the venting gas stream. Thus, thermal propagation to adjacent battery cells 12 and a thermal runaway of the adjacent battery cells 12 is reliably prevented.

### Reference signs

- 12: battery cells
- 13: top side
- 14: venting exits
- 16: adhesive
- 20: cover element
- 30: wall member
- 32: protrusion
- 34: venting channel
- 100: battery system
- V: venting gas stream

## Claims

1. A battery system (100), comprising:
a plurality of battery cells (12), wherein each of the battery cells (12) comprises a venting side with a venting exit (14) for discharging a venting gas stream (V), and
a cover element (20) covering one or more of the plurality of battery cells (12) at the venting sides to protect the battery cells (12) from the venting gas stream (V), wherein the cover element (20) is directly sealed to the venting side of each battery cell (12) by an adhesive (16) extending around each of the venting exits (14).

2. The battery system (100) according to claim 1, wherein the cover element (20) is formed in one piece from a sheet material.

3. The battery system (100) according to any one of the preceding claims, wherein the cover element (20) is a mica sheet.

4. The battery system (100) according to any one of the preceding claims, wherein the entire venting side surfaces of the battery cells (12), aside from the areas around the venting exits (14), are provided with the adhesive (16).

5. The battery system (100) according to any one of the preceding claims, wherein the adhesive (16) comprises an adhesive bead.

6. The battery system (100) according to any one of the preceding claims, wherein the adhesive (16) comprises a gap filler.

7. The battery system (100) according to any one of the preceding claims, wherein the cover element (20) is adapted to rupture at a section opposite the venting exits (14) by the pressure of the discharged venting gas stream (V) exiting the covered venting exit (14).

8. The battery system (100) according to any one of the preceding claims, wherein the cover element (20) comprises material weakening portions opposite the venting exits of the battery cells.

9. An electric vehicle comprising the battery system (100) according to any one of the preceding claims.

## Amended claims

### Amended claims in accordance with Rule 137(2) EPC.

1. A battery system (100), comprising:
a plurality of battery cells (12), wherein each of the battery cells (12) comprises a venting side with a venting exit (14) for discharging a venting gas stream (V), and
a cover element (20) covering the plurality of battery cells (12) at the venting sides to protect the battery cells (12) from the venting gas stream (V), wherein the cover element (20) is directly sealed to the venting side of each battery cell (12) by an adhesive (16) extending around each of the venting exits (14), wherein the adhesive includes a plurality of adhesive beads, each adhesive bead surrounding one of the venting exits.

2. The battery system (100) according to claim 1, wherein the cover element (20) is formed in one piece from a sheet material.

3. The battery system (100) according to any one of the preceding claims, wherein the cover element (20) is a mica sheet.

4. The battery system (100) according to any one of the preceding claims, wherein the adhesive (16) comprises a gap filler.

5. The battery system (100) according to any one of the preceding claims, wherein the cover element (20) is adapted to rupture at a section opposite the venting exits (14) by the pressure of the discharged venting gas stream (V) exiting the covered venting exit (14).

6. The battery system (100) according to any one of the preceding claims, wherein the cover element (20) comprises material weakening portions opposite the venting exits of the battery cells.

7. An electric vehicle comprising the battery system (100) according to any one of the preceding claims.
